# EUROPÄISCHE PATENTANMELDUNG

(11) **EP 1 103 908 A2**
(43) Veröffentlichungstag der Anmeldung: **30.05.2001**
(21) Anmeldenummer: 00125161.0
(22) Anmeldetag: 18.11.2000
(51) Int. Cl.: G06F 17/60

(54) **Kontroll- und Überwachungssystem zur Verifizierung objektbezogener Aktionen und Transaktionen legalen Charakters**

(30) Priorität: 19.11.1999 EP 99122996
(71) Anmelder: Brockmans, Rolf-Georg, 47877 Willich (DE)
(72) Erfinder: Brockmans, Rolf-Georg, 47877 Willich (DE)
(74) Vertreter: Stenger, Watzke & Ring Patentanwälte

(57) **Zusammenfassung**

Um ein Kontroll- und Überwachungssystem zur Verifizierung objektbezogener Aktionen und Transaktionen legalen Charakters zu schaffen, welches es ermöglicht, Luft- und Mehrfachfinanzierungen aufzudecken und damit zu vermeiden, Objekte, die Gegenstand krimineller Handlungen sind, zu orten und zu identifizieren und multidirektionale Geschwindigkeits- und Abstandsmessungen durchzuführen, wird zur technischen Lösung mit der Erfindung vorgeschlagen ein Kontroll- und Überwachungssystem zur Verifizierung objektbezogener Aktionen und Transaktionen legalen Charakters, umfassend eine zentrale Codevergabestelle; mindestens eine zentral geführte Datenbank, in welcher objektbezogene Daten solitär implementiert und durch finanzierungsrelevante Daten abfragbar ergänzt werden können; eine Registrierungssoftware für Datenerfassung und -ergänzung; eine für Fernabfrage ausgelegte netzwerkfähige Abfragesoftware; mindestens einen mit jedem Objekt an geeigneter Stelle nach Möglichkeit unsicht- und unlösbar verbundenen fälschungssicheren aktiven oder passiven Mikrowellentransponder mit unveränderbarer nicht auslesbarer Codierung sowie eine drahtgebundene oder drahtlose, mobile oder stationäre, kontaktgebundene oder kontaktlose Abfragehardware zum Zwecke der physischen Objektprüfung und der Sammlung von Meßdaten.

## Beschreibung

Die vorliegende Erfindung betrifft ein Kontroll- und Überwachungssystem zur Verifizierung objektbezogener Aktionen und Transaktionen legalen Charakters.

Es ist bekannt, daß bei allen Formen der Finanzierung von mobilen Objekten kreditgebende Institute nach Vorlage gerätebezogener Daten bzw. Sichtkontrolle Kredite gewähren, ohne objektiv feststellen zu können, ob das dem Finanzierungsvorgang zugrundeliegende Objekt überhaupt physisch existiert oder bereits durch ein anderes Institut finanziert worden ist. Derartige Finanzierungsvorgänge beziehen sich auf Massenartikel wie z. B. Autos, Kopierer, Computer, aber auch auf Großgerät wie Kräne, Bagger und Maschinen aller Art. Häufig werden Objekte zur Erlangung von Liquidität mehrfach finanziert, was zwar einen betrügerischen Ausgangspunkt hat, aber bisher nicht effektiv kontrollierbar ist. Mit derselben kriminellen Energie wird die physische Existenz von Serienprodukten bei Sichtprüfung eines präparierten homologen Musters, z. B. durch Anbringen eines gefälschten Typschildes, vorgetäuscht und Finanzinstitute durch sog. Luftfinanzierungen geschädigt.

Überdies ist es bisher nicht möglich, unterschlagene bzw. gestohlene Objekte mit einfachen Mitteln sicher zu identifizieren, zu lokalisieren und ggf. Gegenmaßnahmen einzuleiten. Dies gilt auch für Objekte, die als solche nicht Gegenstand einer kriminellen Handlung sind, sondern zu illegalen Zwecken genutzt werden, z. B. zum Drogentransport.

Weiterhin gibt es bis dato keine Möglichkeit, multidirektionale Geschwindigkeits- und Abstandsmessungen zeitgleich an einer Vielzahl von bewegten Objekten durchzuführen und diese Objekte in einem automatisierten Arbeitsgang zu identifizieren, lokalisieren, verifizieren und die Auswertungen je nach Bedarf automatisch oder manuell zu verarbeiten.

Es ist somit die Aufgabe der vorliegenden Erfindung, ein Kontroll- und Überwachungssystem zur Verifizierung objektbezogener Aktionen und Transaktionen legalen Charakters zu schaffen, welches es ermöglicht, potentielle Luft- und Mehrfachfinanzierungen vor Schadenseintritt aufzudecken und somit zu vermeiden; Unterschlagungs-, Diebstahls- und solche Schäden zu begrenzen, bei denen ein Objekt zu anderen kriminellen Zwecken, insbesondere als Flucht- und Transportmittel, eingesetzt wird; multidirektionale Geschwindigkeitsmessungen gleichzeitig an einer Vielzahl von bewegten Objekten als auch an einer Vielzahl - auch gleich gerichteter - Meßstrecken durchzuführen, wobei das System einfach und manipulationssicher aufgebaut und unter Nutzung vorhandener technischer Gegebenheiten realisierbar sein soll.

Zur technischen Lösung dieser Aufgabe wird mit der Erfindung vorgeschlagen ein Kontroll- und Überwachungssystem zur Verifizierung objektbezogener Aktionen und Transaktionen legalen Charakters, bestehend aus einer zentral geführten Codevergabestelle, mindestens einer zentral geführten Datenbank, in welcher objektbezogene Daten dergestalt aufgenommen werden, daß selbst Großserienprodukte solitär dargestellt werden und im Falle von Finanzierungsvorgängen durch finanzierungstypische Daten abfragbar ergänzt werden können; einer Registrierungssoftware für Datenerfassung und -ergänzung; einer für Fernabfrage ausgelegten netzwerkfähigen Abfragesoftware; mindestens einem mit jedem Objekt an geeigneter Stelle nach Möglichkeit unsicht- und unlösbar verbundenen fälschungssicheren aktiven oder passiven Mikrowellentransponder mit unveränderbarer nicht auslesbarer Codierung sowie einer drahtgebundenen oder drahtlosen, mobilen oder stationären, kontaktgebundenen oder kontaktlosen Abfragehardware zum Zwecke der physischen Objektprüfung und der Sammlung von Meßdaten.

Das erfindungsgemäße Sicherheitskontrollsystem stellt eine gemeinsame technische Lösung für zwei Probleme dar, die darin bestehen, daß einerseits voneinander isolierte Vorgänge nicht verifizierend zugeordnet werden und andererseits unsichere Prüfparameter, z. B. Inaugenscheinnahme gestanzter Typschilder, zu fehlerhaften Prüfergebnissen führen können. Mit der erfindungsgemäßen Lösung wird ein Verfahren zur Verfügung gestellt, das die beschriebenen Probleme beispielsweise im Falle der Finanzierung vorzugsweise wie folgt löst:
- Jedes üblicherweise für eine Finanzierung in Frage kommende Objekt wird hersteller-, zulieferer- oder finanziererseits mit mindestens einem fälschungssicher codierten vektorisiert oder radial auslesbaren Mikrowellentransponder bestückt, wobei Komponenten, die entweder einen eigenen Handelswert besitzen wie z. B. Motoren oder üblicherweise Gegenstand betrügerischer Machenschaften sind wie z. B. Karosseriebleche, zusätzlich mit Mikrowellentranspondern ausgerüstet werden können. Diese Transponder werden entweder so mit dem Objekt verbunden, daß sie nur durch Zerstörung zu entfernen sind, oder zwischen zwei Lackschichten aufgetragen. Sie können zusätzlich mit segmentierten codierbaren Speicherbereichen und / oder sensorischen Eigenschaften ausgerüstet sein.
- Eine zentralisierte Datenbank wird initialisierend herstellerseits, über ein neutrales Datenverarbeitungszentrum oder finanziererseits mit den bisher bekannten objektbezogenen Daten, z. B. dem Inhalt eines KFZ - Briefes, den fälschungssicheren Seriennummern eines jeden Transponders, ggf. weiterer sicherheitsrelevanter Informationen im unveränderbaren Speicherbereich sowie den Seriennummern eines jeden Transponders von entsprechend ausgerüsteten Ersatz- und Zusatzteilen versehen.
- Das erste ein Objekt abfragende Institut blockiert nach erfolgreicher Verifizierung, und positivem Finanzierungsentscheid dasselbe im Bereich der Datenbank für die Laufzeit der Finanzierung unter weiterer Angabe seiner Identität sowie seines Eigentümerstatus. Nach ordnungsgemäßem Ablauf der Finanzierung wird die Blockierung durch eine Freigaberoutine seitens des finanzierenden Instituts gelöst.
- Sollte die Laufzeit der Finanzierung aufgrund nicht laufzeitgebundener Kredite, die üblicherweise der Beschaffung dienen, z. B. Einkaufsfinanzierung, Factoring oder volumenabhängiger Kredite, nicht angegeben werden können, so wird das Objekt nach erfolgreicher Verifizierung in der Datenbank so markiert, daß ein finanzierendes Institut das Objekt mittels eines Freigabecodes des Zwischenfinanzierers endgültig blockieren kann.
- Objekte, die zunächst nicht Gegenstand einer Finanzierung werden, sind, sofern herstellerseits in der Datenbank erfaßt, als physisch existierend gekennzeichnet, eine Erfassung des Eigentümers erfolgt lediglich auf Wunsch desselben. Finanzierende Institute haben die Möglichkeit, die Verität der Objektangaben zu prüfen und ggf. nach erfolgter Finanzierung das Objekt in der Datenbank für einen Finanzierungszeitraum zu blockieren.
- Objekte, die nie Gegenstand einer Finanzierung werden und trotzdem in der zentralen Datenbank gelistet sind, werden ein Jahr nach Ende der landesüblichen Abschreibungsdauer gelöscht, sofern dem nicht stichhaltige Fakten entgegensprechen, z. B. eine gültige Zulassung als KFZ.

Es läßt sich somit in Analogie zu einem Grundbuch oder einer SCHUFA - Auskunft feststellen, ob ein Gegenstand bereits mit Rechten Dritter belastet, finanziert, verleast oder sonstwie zum Geschäftsgegenstand gemacht wurde. Es läßt sich darüber hinaus feststellen, ob ein Objekt, das in einer der o. g. Weisen zum Geschäftsgegenstand gemacht werden soll, jemals produziert worden ist und mithin zum Zeitpunkt der Finanzierung existieren könnte.

Die Eintragung der Daten sollte nur durch autorisiertes Personal und Gerät erfolgen können; analog kann die Abfrage von Daten nur durch dazu autorisiertes Personal und Gerät erfolgen, wobei jede Zugriffsaktion protokolliert wird. Beispielsweise kann der von jedem Abfragehardwaregerät benötigte Mastercode mittels einer kontaktbehafteten Chipkarte mit Kryptoprozessor dem SAM ( security authentication module ) des Abfragehardwaregerätes übergeben werden. Diese Karten sind nach heutigem Stand der Technik nicht auslesbar und auch durch kriminelle Machenschaften, Diebstahl o. ä., nicht weiterverwertbar, da sie keinerlei Daten zu Personen, Objekten oder Messungen speichern, sondern lediglich der Authentifizierung zwischen Transponder und Lesegerät dienen.

Sollten, aus welchem Grund auch immer, seitens eines Finanzierers Zweifel an der Identität eines Objektes oder von Teilen dieses Objektes oder an der Unversehrtheit dieses Objektes bestehen, so gibt er dem potentiellen Kreditnehmer die Möglichkeit, dieses Objekt bei einer Lesestelle vorzuführen, die die Verität der vom potentiellen Kreditnehmer gemachten Angaben feststellt und diese Daten dem Finanzierer durch zeitgleiche Datenfernübertragung mitteilt.

Objekte, die unmittelbar, d. h. durch Diebstahl oder Unterschlagung o. ä., durch Unfallflucht, oder mittelbar, d. h. als Transportmittel / - behältnis, als Kurier- oder Fluchtfahrzeug oder in einem anderen kriminellen Kontext benutzt werden, werden sofort nach Kenntniserlangung in der Datenbank für alle Transaktionen gesperrt und die Objektidentdaten in Form einer Übergaberoutine den jeweils zuständigen Behörden zugänglich gemacht.

Objekte, die mit mindestens einem Mikrowellentransponder ausgerüstet sind und im Verlauf einer kriminellen Handlung benutzt oder befördert werden, können mit Hilfe von Lesegeräten, die von der zentralen Codevergabestelle auslesesicher mit einem Mastercode versehen werden, sowohl identifiziert als auch permanent geortet werden. Die Ortung und Feststellung der Bewegungsrichtung basierend auf der Auswertung des Doppler - Effektes und der Signallaufzeiten ist auch dann noch durchführbar, wenn sich das Objekt weit außerhalb des normalen Ansprechbereiches des Lesegerätes befindet, was die Arbeit der Verfolgungsbehörden in vorteilhafter Weise erleichtert. Die zentrale Codevergabestelle dient dem Datenschutz und der Abhörsicherheit; sie ist zur einwandfreien Funktion des Systems nicht erforderlich.

Dieselbe Art von Lesegeräten dient dazu, multidirektionale Geschwindigkeits- und Abstandsmessungen an Objekten, die mit einem Mikrowellentransponder ausgerüstet sind, durchzuführen, d. h. es kann gleichzeitig eine Vielzahl von Objekten in verschiedenen Winkeln zur Meßstelle erfaßt werden, wobei es unerheblich ist, ob diese Objekte sich der Meßstelle nähern, sich von ihr entfernen oder eine Lateralbewegung ausführen. Obwohl die Objekte durch ihre Erfassung bereits zweifelsfrei identifiziert sind, kann man die Lesegeräte zum Zwecke der Beweissicherung mit einer oder mehreren Kameras koppeln. Ein besonderer Vorteil dieser Erfindung ist die Überwachung von Gefahrenpunkten, z. B. Baustellenbereiche, ohne im Gefahrenbereich irgendwelche Installationen von Meßgeräten oder Anbringen von Fahrbahnmarkierungen vornehmen zu müssen. Ein weiterer erfindungsgemäßer Vorteil ist die Identifizierung von Objekten und Erfassung von Meßdaten bei schwierigen Sichtverhältnissen, z. B. Nebel.

Mit der Erfindung wird ein einfach aufgebautes und realisierbares Kontroll- und Überwachungssystem zur Verifizierung objektbezogener Aktionen und Transaktionen legalen Charakters bereitgestellt, welches auf einfache, kostengünstige und praktikable Weise das Problem der Mehrfachlegende von Objekten löst. Weiterhin eröffnet diese Erfindung in vorteilhafter Weise sowohl den Strafverfolgungsbehörden die Möglichkeit, objektbezogene Kriminalität zu begrenzen, als auch den Ordungsbehörden die Möglichkeit, mit vergleichsweise geringem Materialeinsatz gleichzeitig eine Vielzahl von Objekten auf Ordnungswidrigkeiten zu untersuchen und somit einen Generationssprung von der Punkt- zur Raumüberwachung zu vollziehen.

## Patentansprüche

1. Kontroll- und Überwachungssystem zur Verifizierung objektbezogener Aktionen und Transaktionen legalen Charakters, umfassend eine zentrale Codevergabestelle; mindestens eine im wesentlichen zentral geführte Datenbank, in der objektbezogene Daten dergestalt aufgenommen werden, daß jedes Objekt als Solitär erscheint, und in der, im Falle von Finanzierungsvorgängen aller Art, die objektbezogenen Daten durch finanzierungstypische Angaben abfragbar ergänzbar sind; eine Registrierungssoftware für Datenerfassung und -ergänzung; eine für Fernabfrage ausgelegte netzwerkfähige Abfragesoftware; mindestens einen mit jedem Objekt an geeigneter Stelle unsichtbar und unlösbar verbundenen fälschungssicheren aktiven oder passiven Mikrowellentransponder mit unveränderbarer nicht auslesbarer Codierung sowie einer drahtgebundenen oder drahtlosen, mobilen oder stationären, kontaktgebundenen oder kontaktlosen Abfragehardware zum Zwecke der physischen Objektprüfung und Meßdatenerfassung.

2. Kontroll- und Überwachungssystem nach Anspruch 1, dadurch gekennzeichnet, daß die Registrierungssoftware nur durch autorisiertes Personal bedienbar ist.

3. Kontroll- und Überwachungssystem nach einem der vorhergehenden Ansprüche, dadurch gekennzeichnet, daß für die Nutzung der Abfragesoftware ein Autorisierungscode vorgesehen ist.

4. Kontroll- und Überwachungssystem nach einem der vorhergehenden Ansprüche, dadurch gekennzeichnet, daß das System auf einem DFÜ - Rechnernetz installiert ist.

5. Kontroll- und Überwachungssystem nach einem der vorhergehenden Ansprüche, dadurch gekennzeichnet, daß dieses über das Internet betreibbar ist.

6. Kontroll- und Überwachungssystem nach einem der vorhergehenden Ansprüche, dadurch gekennzeichnet, daß die objektbezogenen Daten mindestens eine vom Objekthersteller bereitgestellte Codierung umfassen.

7. Kontroll- und Überwachungssystem nach einem der vorhergehenden Ansprüche, dadurch gekennzeichnet, daß die Erfassung objektbezogener Daten direkt von den Objektherstellern zentralisiert durchgeführt wird.

8. Kontroll- und Überwachungssystem nach einem der vorhergehenden Ansprüche, dadurch gekennzeichnet, daß durch Eingabe der objektbezogenen Codierung durch den Finanzierer diesem Informationen über bisherige Finanzierungsvorgänge gegeben werden.

9. Kontroll- und Überwachungssystem nach einem der vorhergehenden Ansprüche, dadurch gekennzeichnet, daß jedem in einem Objekt zu montierenden Mikrowellentransponder seitens des Transponderherstellers eine einzigartige und fälschungssichere Seriennummer zugeordnet wird, die später zum Bestandteil des objektbezogenen Datensatzes wird.

10. Kontroll- und Überwachungssystem nach einem der vorhergehenden Ansprüche, dadurch gekennzeichnet, daß seitens der Codevergabestelle jedem in einem Objekt zu montierenden Mikrowellentransponder ein fälschungssicherer nicht auslesbarer Code zugeordnet wird, der außerhalb der Codevergabestelle niemandem zugänglich gemacht wird und in keiner zugänglichen Datenbank, auch nicht versteckt, enthalten ist.

11. Kontroll- und Überwachungssystem nach einem der vorhergehenden Ansprüche, dadurch gekennzeichnet, daß seitens der Codevergabestelle jedem Abfragehardwaregerät ein fälschungssicherer nicht auslesbarer Mastercode zugeordnet wird, der außerhalb der Codevergabestelle niemandem zugänglich gemacht wird und in keiner zugänglichen Datenbank, auch nicht versteckt, enthalten ist.

12. Kontroll- und Überwachungssystem nach einem der vorhergehenden Ansprüche, dadurch gekennzeichnet, daß der von jedem Abfragehardwaregerät benötigte Mastercode mittels einer kontaktbehafteten Chipkarte mit Kryptoprozessor dem SAM ( security authentication module ) des Abfragehardwaregerätes übergeben wird.

13. Kontroll- und Überwachungssystem nach einem der vorhergehenden Ansprüche, dadurch gekennzeichnet, daß zur Erzeugung von Verschlüsselungsalgorithmen Pseudozufallsgeneratoren verwendet werden.

14. Kontroll- und Überwachungssystem nach einem der vorhergehenden Ansprüche, dadurch gekennzeichnet, daß Abfragehardwaregeräte mit Meßdatenerfassungs- und -auswertungsgeräten über handelsübliche Schnittstellen verbindbar sind.

15. Kontroll- und Überwachungssystem nach einem der vorhergehenden Ansprüche, dadurch gekennzeichnet, daß die in einem Objekt verbauten Mikrowellentransponder segmentierte codierte Speicherbereiche enthalten, die von dem System selbst nicht benötigt werden.

16. Kontroll- und Überwachungssystem nach einem der vorhergehenden Ansprüche, dadurch gekennzeichnet, daß die gewerbliche Nutzung codierter Speicherbereiche auf den in einem Objekt enthaltenen Mikrowellentranspondern Dritten, insbesondere zur Erhebung von Straßen-, Tunnel- oder Brückennutzungsgebühren, zur Initialisierung und Bezahlung automatisierter Tankvorgänge und zur Zeiterfassung und Bezahlung in Parkhäusern, zugänglich gemacht werden kann, ohne die Sicherheit des Systems in irgendeiner Weise zu beeinträchtigen.
